# EUROPEAN PATENT APPLICATION

(11) **EP 3 522 604 A1**
(43) Date of publication of application: **07.08.2019**
(21) Application number: 17855308.7
(22) Date of filing: 21.06.2017
(51) Int. Cl.: H04W 36/38, H04W 16/28, H04W 36/30, H04W 80/02

(54) **CONTROL DEVICE, TERMINAL DEVICE, CONTROL METHOD, AND PROGRAM**

(30) Priority: 27.09.2016 JP 2016188151
(71) Applicant: KDDI Corporation, Tokyo 163-8003 (JP)
(72) Inventor: PENG, Hailan, Fujimino-shi Saitama 356-8502 (JP); HASHIMOTO, Noriyuki, Fujimino-shi Saitama 356-8502 (JP); MORIWAKI, Kazuya, Fujimino-shi Saitama 356-8502 (JP); SUEGARA, Yasuhiro, Fujimino-shi Saitama 356-8502 (JP)
(74) Representative: Pitchford, James Edward
(86) International application number: PCT/JP2017/022820
(87) International publication number: WO 2018/061349

(57) **Abstract**

A control device in a base station device that includes one or more first devices and a second device that is connected to the one or more first devices, the one or more first devices controlling layers that are lower than a radio resource control (RRC) layer and that include a medium access control layer, and the second device controlling layers that are higher than the layers controlled by the one or more first devices and that include the RRC layer, the control device being any of the one or more first devices, notifies the terminal device of information regarding measurement target beams that are to be measured by the terminal device, while a connection to the terminal device is established, receives a measurement report regarding the measurement target beams from the terminal device, selects a beam with which the terminal device is to connect by switching from the connected beam based on the measurement report, and notifies the terminal device of information regarding the second beam. These processes are performed without involving the second device.

## Description

### TECHNICAL FIELD

The present invention relates to a control device, a terminal device, a control method, and a program, and specifically relates to a handover technique in radio communication.

### BACKGROUND ART

A novel radio access technique of the fifth generation (hereinafter referred to as "5G") has been considered in the Third Generation Partnership Project (see Non-Patent Literature 1). In a 5G system, it is assumed that a base station device that is also called NR gNB includes a plurality of devices that are called a central unit (CU) and a distributed unit (DU). Note that the DU is also called a transmission receiver point (TRP). It is assumed that the DU performs processing in layers that are lower than a radio resource control (RRC) layer and that include at least a physical (PHY) layer, and the CU performs processing in layers that are higher than the layers controlled by the DU and that include the RRC layer. Also, it is assumed that a plurality of DUs are connected to a single CU. Each DU forms one or more beams through, for example, beamforming and establishes a connection with a terminal device by using at least one of the beams. That is, the base station device includes at least one CU and a plurality of DUs connected to the CU, and as a result of each DU forming one or more beams, the base station device forms a plurality of beams and is connected to a terminal device by using at least one of the beams.

In the 5G system, it is possible to use a radio wave in a frequency band that is higher in frequency than conventionally used frequency bands, but the radio wave in such a high frequency band is largely affected by obstacles or the like, and therefore the state of the radio wave may drastically deteriorate between the base station device and the terminal device. In such a case, a beam with which the terminal device connects can be switched through handover to another beam that is formed by the base station device. Conventionally, handover is performed through signaling in the RRC layer.

### CITATION LIST

### NON-PATENT LITERATURE

Non-Patent Literature 1: 3GPP contribution, R2-164306, May 2016

### SUMMARY OF INVENTION

### TECHNICAL PROBLEM

When a large number of DUs are connected to a single CU and each DU forms a plurality of beams, an extremely large number of beams may be formed under the single CU. If a conventional handover process is performed in the above situation, the processing load on the CU that executes processing in the RRC layer may become extremely large due to handover that is frequently performed between the large number of beams, and the amount of signaling between the CU and the DUs may also become extremely large.

The present invention provides a handover process that can reduce the load on a device that executes processing in the RRC layer in a radio communication system.

### SOLUTION TO PROBLEM

A control device according to an aspect of the present invention is a control device in a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the control device being any of the one or more first devices, and including: control means; and communication means that is capable of transmitting a signal to and receiving a signal from a terminal device by using an antenna that is capable of forming at least one beam, wherein the control means performs control to: cause the communication means to notify the terminal device of information regarding measurement target beams that are to be measured by the terminal device; while a connection to the terminal device is established with a first beam among the at least one beam, cause the communication means to receive a measurement report regarding the measurement target beams from the terminal device; based on the measurement report, select a second beam from among the measurement target beams, the second beam being a beam with which the terminal device is to connect by switching from the first beam; and cause the communication means to notify the terminal device of information regarding the second beam, the measurement target beams are included in beams that are formed by the one or more first devices connected to the second device, and the control means performs at least control regarding reception of the measurement report, selection of the second beam, and notification of the information regarding the second beam, without involving the second device.

A control device according to another aspect of the present invention is a control device in a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the control device being any of the one or more first devices, and including: control means; and communication means that is capable of transmitting a signal to and receiving a signal from a terminal device by using an antenna that is capable of forming at least one beam, wherein the control means performs control to: cause the communication means to notify the terminal device of information regarding measurement target beams that are to be measured by the terminal device; while a connection to the terminal device is established with a first beam among the at least one beam, cause the communication means to receive, from the terminal device, notification of a result of selection of a second beam by the terminal device, the second beam being a beam with which the terminal device is to connect by switching from the first beam; determine whether or not to approve switching of a beam that is connected with the terminal device from the first beam to the second beam; and cause the communication means to notify the terminal device of a result of the determination, the measurement target beams are included in beams that are formed by the one or more first devices connected to the second device, and the control means performs at least control regarding reception of the notification of the selection result, determination as to whether or not to approve switching to the second beam, and notification of the result of the determination, without involving the second device.

A terminal device according to an aspect of the present invention is a terminal device that is connected to a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the terminal device including: control means; and communication means that is capable of transmitting a signal to and receiving a signal from any of the one or more first devices by connecting with any of at least one beam that is formed by the one or more first devices, wherein the control means performs control to: cause the communication means to receive information regarding measurement target beams that are to be measured by the terminal device from a control device that is any of the one or more first devices; measure each of the measurement target beams through the communication means; while a connection to the control device is established with a first beam among the at least one beam, cause the communication means to transmit a measurement report regarding the measurement target beams to the control device; cause the communication means to receive, from the control device, information regarding a second beam with which the terminal device is to connect by switching from the first beam; and cause the communication means to switch a beam that is connected with the terminal device to the second beam, the measurement target beams are included in beams that are formed by the one or more first devices connected to the second device, and the control device performs control regarding switching of the beam connected with the terminal device based on the measurement report without involving the second device.

A terminal device according to another aspect of the present invention is a terminal device that is connected to a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the terminal device including: control means; and communication means that is capable of transmitting a signal to and receiving a signal from any of the one or more first devices by connecting with any of at least one beam that is formed by the one or more first devices, wherein the control means performs control to: cause the communication means to receive information regarding measurement target beams that are to be measured by the terminal device from a control device that is any of the one or more first devices; measure each of the measurement target beams through the communication means; while a connection to the control device is established with a first beam among the at least one beam, select a second beam based on a measurement result regarding the measurement target beams, the second beam being a beam with which the terminal device is to connect by switching from the first beam; cause the communication means to notify the control device of a result of the selection; cause the communication means to receive information that indicates whether or not the result of the selection is approved by the control device; and when the result of the selection is approved by the control device, cause the communication means to switch a beam that is connected with the terminal device from the first beam to the second beam, the measurement target beams are included in beams that are formed by the one or more first devices connected to the second device, and the control device performs control regarding switching of the beam connected with the terminal device based on the result of the selection without involving the second device.

A terminal device according to still another aspect of the present invention is a terminal device that is connected to a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the terminal device including: control means; and communication means that is capable of transmitting a signal to and receiving a signal from any of the one or more first devices by connecting with any of at least one beam that is formed by the one or more first devices, wherein the control means performs control to: cause the communication means to receive information regarding measurement target beams that are to be measured by the terminal device from a control device that is any of the one or more first devices; measure each of the measurement target beams through the communication means; while a connection to the control device is established with a first beam among the at least one beam, select a second beam based on a measurement result regarding the measurement target beams, the second beam being a beam with which the terminal device is to connect by switching from the first beam; and cause the communication means to establish a connection with the second beam without control being performed by the control device, and the measurement target beams are included in beams that are formed by the one or more first devices connected to the second device.

### ADVANTAGEOUS EFFECTS OF INVENTION

According to the present invention, in a handover process of a radio communication system, it is possible to reduce the load on a device that executes processing in the RRC layer.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings are included in the description, constitute a part of the description, illustrate embodiments of the present invention, and are used for explaining the principle of the present invention in conjunction with the description of the embodiments.
FIG. 1 is a diagram illustrating an example of a configuration of a radio communication system.
FIG. 2 is a diagram illustrating an example of hardware configurations of a DU and a terminal device.
FIG. 3 is a diagram illustrating an example of a functional configuration of the DU.
FIG. 4 is a diagram illustrating an example of a functional configuration of the terminal device.
FIG. 5A is a diagram illustrating an example of the flow of a process for making notification of information regarding measurement target beams.
FIG. 5B is a diagram illustrating an example of the flow of a process for making notification of information regarding measurement target beams.
FIG. 6 is a diagram illustrating a first example of the flow of a process for switching a connected beam.
FIG. 7 is a diagram illustrating a second example of the flow of the process for switching a connected beam.
FIG. 8 is a diagram illustrating a third example of the flow of the process for switching a connected beam.

### DESCRIPTION OF EMBODIMENTS

The following describes an embodiment of the present invention with reference to the drawings.

### (Configuration of Radio Communication System)

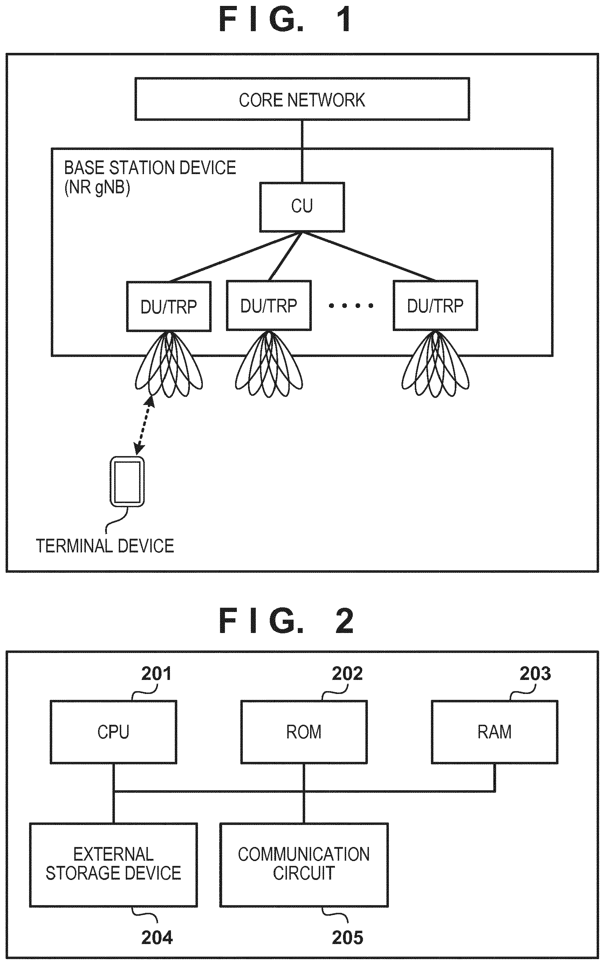

FIG. 1 illustrates an example of a configuration of a radio communication system according to the present embodiment. The radio communication system according to the present embodiment is, for example, a mobile radio communication system of the fifth generation (5G) and includes a base station device (NR gNB) and a terminal device. A radio connection is established between the base station device and the terminal device and a radio signal is transmitted therebetween. The base station device is connected to a core network by, for example, a wire (in some cases, a line that includes a radio section) and is connected to other base station devices (not illustrated) via the core network. Note that the core network is connected to an external network such as the Internet via, for example, a gateway, and the base station device can be connected to the external network via the core network.

The base station device of the present embodiment includes, as internal units, a first unit (first control device) that controls lower layers in communication and a unit (second control device) that controls upper layers. In FIG. 1, the first control device is denoted with DU (distributed unit)/TRP (transmission receiver point) and the second control device is denoted with CU (central unit). In the following description, the first control device is referred to as a DU and the second control device is referred to as a CU. The DU of the present embodiment is configured to control at least the physical (PHY) layer and a medium access control (MAC) layer, and not to control at least the radio resource control (RRC) layer. On the other hand, the CU is configured to control layers that are higher than the DU and that include the RRC layer. Although a single DU may be connected to the CU, a plurality of DUs are connected to the CU as illustrated in FIG. 1. Note that a line that connects the CU and the DU is called a fronthaul line. The CU and the DU may be directly connected as illustrated in FIG. 1, or a switch (not illustrated) that is connected to a plurality of DUs may be connected to the CU and communication between the CU and each DU may be performed based on control of the switch. When a switch is used, communication between DUs can be performed without involving the CU.

The DU is capable of forming a plurality of beams through beamforming. As a result of a large number of DUs forming a plurality of beams as illustrated in FIG. 1, the number of beams that can be formed by the base station device increases, and therefore a large number of users can be accommodated and a total throughput can be increased. In the 5G system, it is assumed that a frequency that is higher than those used in conventional systems such as the Long Term Evolution (LTE) is used. Accordingly, even when the terminal device is connected to the base station device by using one of the plurality of beams, the radio environment may drastically change and it may not be possible to maintain the connection. Therefore, for example, when quality of a first beam with which the terminal device is connected among the plurality of beams degrades, the terminal device performs handover processing in order to establish a connection with, for example, a second beam among the plurality of beams.

The handover processing is conventionally performed through RRC signaling. When such handover processing is applied to the system of FIG. 1, the CU executes the handover processing for a large number of terminal devices, and therefore the processing load on the CU becomes excessive and the load on the fronthaul line between the CU and the DUs also becomes extremely large. Therefore, the present embodiment provides a mechanism for completing the handover processing between beams that are formed by one or more DUs without involving processing by the CU. According to this mechanism, the CU is not involved in the handover processing except when handover is performed between, for example, two CUs, and therefore the load on the CU and the load on the fronthaul line can be reduced.

For example, a DU notifies a terminal device that is connected with a beam formed by the DU of information regarding measurement target beams that are to be measured by the terminal device among beams that can be formed by a plurality of DUs belonging to a CU to which the DU is connected. At this time, configuration may be such that the DU only notifies the terminal device of information regarding beams that can be formed by the DU as measurement targets. That is, the measurement target beams may be identified as beams that are included in (i.e., at least a part of) a beam group that can be formed by the DU transmitting the information regarding the measurement target beams. Alternatively, the DU may notify the terminal device of a group of beams including the beam with which the terminal device is connected, as measurement targets. That is, the measurement target beams may include at least one beam that can be formed by another DU as well as at least a part of the beam group that can be formed by the DU transmitting the information regarding the measurement target beams. The measurement target beam or beam group can be dynamically changed according to the position of the terminal device, for example. Note that information regarding a measurement target beam is identified with, for example, a beam ID, and based on the beam ID, the terminal device can identify, for example, positions of a frequency domain and a time domain in which a reference signal is transmitted. In this case, the terminal device can measure radio quality of each measurement target beam by observing the reference signal at the positions of the frequency domain and the time domain identified based on the beam ID. Note that the information regarding the measurement target beam may include, for example, information regarding a beam setting with which the direction of the beam can be identified. In this case, the terminal device can identify which beam is being measured based on the position of the terminal device, the position of the DU, and the direction of the beam identified with the given information. In this case, even when a plurality of beams have, for example, the same beam ID or the same configuration of the reference signal, the terminal device can identify the beam that is being measured.

The DU can transmit the information regarding the measurement target beams to each terminal device or simultaneously to all terminal devices under the DU without control being performed by the CU. The DU may transmit the information regarding the measurement target beams when the DU received, from the terminal device, a predetermined signal that indicates the state of a link, such as, radio quality of the currently connected beam falling below a threshold. Note that the DU may transmit the information regarding the measurement target beams by, for example, using a broadcast signal (for example, Master Information Block or System Information Block) under control by the CU.

The terminal device measures quality of radio signals that are transmitted by using the measurement target beams. The measurement is performed based on, for example, reference signals, and the radio quality may be, for example, reference signal received power (RSRP), reference signal received quality (RSRQ), or the like. For example, the terminal device receives a beam ID as information regarding a measurement target beam, identifies, based on the beam ID, resources of the time domain and the frequency domain in which a reference signal is transmitted, and observes the reference signal at the resources to determine the radio quality. The terminal device can measure the radio quality of a beam by roughly identifying the beam being measured from among the measurement target beams based on the position of the terminal device.

The terminal device can transmit a measurement report regarding the radio quality of the measurement target beams to the DU connected to the terminal device. Upon receiving the measurement report, the DU selects a switching target beam with which the terminal device is to connect from among the measurement target beams. For example, based on the measurement report, the DU identifies the beam with the highest radio quality at that point in time, and selects the beam as the switching target beam with which the terminal device is to connect. Note that the DU may select, as the switching target beam, a beam that not only has high radio quality but also forms an area in a region where it is expected that radio quality of at least a predetermined level can be continuously maintained, based on a movement history of the terminal device, for example. Alternatively, the DU may select the switching target beam by another method. The DU notifies the terminal device of a selection result. Based on the selection result of the notification, the terminal device switches a beam that is connected with the terminal device to the specified switching target beam. In the above-described processing, at least processing other than notification of the information regarding the measurement target beams is performed without control being performed by the CU. That is, for example, signaling regarding inter-beam handover that is performed between the terminal device and the base station device is performed in, for example, the MAC layer such that control by the CU in the RRC layer is not required. Therefore, situations in which the CU is involved in the inter-beam handover significantly decrease, and consequently the load on the fronthaul line and the processing load on the CU can be greatly reduced. Note that, when handover is performed between two CUs, control regarding the handover can be performed through RRC signaling.

Alternatively, the terminal device may select, by itself, the switching target beam with which the terminal device is to connect from among the measurement target beams based on the radio quality of the measurement target beams. For example, based on the measurement report, the terminal device identifies the beam with the highest radio quality at that point in time and selects the beam as the switching target beam with which the terminal device is to connect. Note that the terminal device may select the switching target beam by another method as in the above-described case where the DU selects the switching target beam. The terminal device then notifies the DU of a selection result of the switching target beam. The DU determines whether or not to approve switching of the connection by the terminal device to the switching target beam specified by the selection result, and notifies the terminal device of the determination result. For example, the DU can disapprove switching of the connected beam by the terminal device when another terminal device is connected with the beam specified by the result of selection by the terminal device, and the DU can approve switching of the connected beam by the terminal device when no terminal device is connected with the specified beam. Note that the DU may determine whether or not to approve switching of the beam according to another standard. In the above-described processing too, at least processing other than notification of the information regarding the measurement target beams is performed without control being performed by the CU. That is, for example, signaling regarding inter-beam handover performed between the terminal device and the base station device is performed in, for example, the MAC layer such that control by the CU in the RRC layer is not required. Therefore, situations in which the CU is involved in the inter-beam handover significantly decrease, and consequently the load on the fronthaul line and the processing load on the CU can be greatly reduced.

Alternatively, the terminal device may select, by itself, the switching target beam with which the terminal device is to connect from among the measurement target beams based on the radio quality of the measurement target beams, and based on the selection result, autonomously perform processing for switching the connection to the switching target beam. For example, the terminal device may attempt to establish a connection with the selected switching target beam through random access by, for example, transmitting a random access preamble, and perform handover by establishing the connection. In this case, the DU need not perform particular control regarding the inter-beam handover, and consequently the CU also need not perform particular control. Therefore, the load on the fronthaul line and the processing load on the CU can be greatly reduced.

The following describes configurations of the DU and the terminal device that perform processing as described above and the flow of the processing.

### (Hardware Configuration)

FIG. 2 illustrates an example of hardware configurations of the DU and the terminal device. In an example, the DU and the terminal device have the hardware configuration as illustrated in FIG. 2, and includes, for example, a CPU 201, a ROM 202, a RAM 203, an external storage device 204, and a communication circuit 205. In the DU and the terminal device, the CPU 201 executes programs that realize functions of the DU and the terminal device as described above, the programs being stored in, for example, any of the ROM 202, the RAM 203, and the external storage device 204.

The DU and the terminal device communicate with another device through the communication circuit 205 that is controlled by the CPU 201, for example. Note that the communication circuit 205 of the DU is capable of communicating with the CU via, for example, the fronthaul line, and also capable of communicating with another DU via the CU or not via the CU but via a switch that is located between the CU and the DU. The communication circuit 205 of the DU is also capable of performing radio communication with the terminal device by forming one or more (a plurality of) beams. The communication circuit 205 of the terminal device is configured such that it can connect with at least one of the beams formed by the communication circuit 205 of the DU, and can perform radio communication with the DU by using the beam. Although the configuration of the DU and the terminal device schematically illustrated in FIG. 2 includes a single communication circuit 205, this configuration should not be taken as a limitation, and each of the DU and the terminal device may include a plurality of communication circuits. For example, the DU includes a first communication circuit for communication via the fronthaul line (line between the DU and the above-described switch) and a second communication circuit for radio communication. The terminal device may include, for example, a first communication circuit in accordance with radio communication standards of the fourth or earlier generation and a second communication circuit in accordance with radio communication standards of the fifth generation. The terminal device may include, for example, a radio communication circuit in accordance with standards of a network such as a wireless LAN other than a cellular network, and may further include, for example, a wired communication circuit that is used for a wired connection such as a USB connection.

Note that the DU and the terminal device may include dedicated hardware that performs respective functions, or some functions may be performed by hardware and other functions may be performed by a computer that executes programs. Alternatively, all functions may be performed by the computer and programs.

### (Functional Configuration)

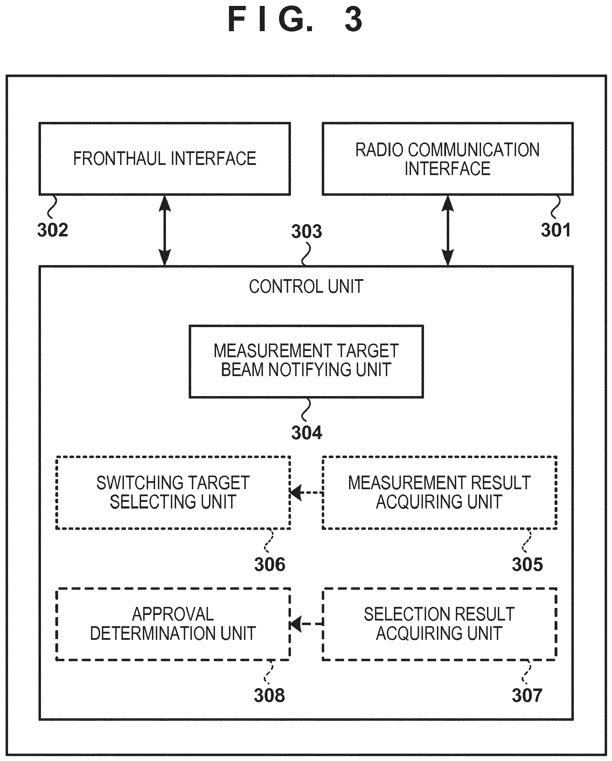

First, an example of a functional configuration of the DU will be described with reference to FIG. 3. In an example, the DU includes a radio communication interface 301, a fronthaul interface 302, and a control unit 303. The control unit 303 includes, for example, a measurement target beam notifying unit 304. The control unit 303 can also include, for example, a measurement result acquiring unit 305 and a switching target selecting unit 306. Note that the control unit 303 can include a selection result acquiring unit 307 and an approval determination unit 308 instead of or in addition to the measurement result acquiring unit 305 and the switching target selecting unit 306. Note that, although the DU can include other functional units such as a functional unit for controlling the medium access control (MAC) layer, those functions are not illustrated in the drawings for simplification of the description.

The radio communication interface 301 is capable of forming one or more beams by controlling a non-illustrated antenna, and is configured such that the radio communication interface 301 can be connected to the terminal device by using at least one of the beams. Note that the radio communication interface 301 can perform control such that, for example, a single terminal device connects with a beam. The radio communication interface 301 is capable of generating a baseband signal from, for example, to-be-transmitted data or data that is generated by the control unit 303, converting the baseband signal to a signal of a radio frequency, and outputting the signal as a radio signal from the antenna. Also, the radio communication interface 301 is capable of converting a radio signal that is received by the antenna to a baseband signal, and obtaining information from the baseband signal.

The fronthaul interface 302 may be a wired communication interface for connecting with the fronthaul line. Note that the fronthaul interface 302 can be connected to, for example, the CU via a switch, but may be configured such that the fronthaul interface 302 can be connected to another DU via the switch and not via the CU. The fronthaul interface 302 is capable of transmitting data that is to be transmitted to the CU or another DU by using a signal of a type that can be interpreted by the CU or the other DU, and also capable of extracting data from a signal that is received from the CU or the other DU.

The control unit 303 is connected to, for example, the radio communication interface 301 and the fronthaul interface 302, and is configured to be capable of controlling these interfaces. Also, the control unit 303 is configured to be capable of performing at least a part of processing regarding inter-beam handover with respect to a connection with the terminal device without control being performed by the CU.

The measurement target beam notifying unit 304 identifies measurement target beams to be measured by the terminal device that is connected to the DU by using any of the beams formed by the DU. For example, when the terminal device is connected with a first beam among a plurality of beams that are formed by a first DU, the first DU identifies, as the measurement target beams, beams that are considered as being available in an area that is adjacent to an area in which communication can be performed by using the first beam. Note that the measurement target beams may be some of the beams that can be formed by the first DU, or may include at least some beams that can be formed by a second DU other than the first DU. The measurement target beam notifying unit 304 may determine the beams to be measured by the terminal device based on, for example, the position of the terminal device, the position of the DU, and directions of beams that can be formed by the DU or other DUs. The measurement target beam notifying unit 304 transmits information regarding the determined measurement target beams to the terminal device by using a radio signal through the radio communication interface 301. Note that the measurement target beam notifying unit 304 can make this notification of the information regarding the measurement target beams in response to, for example, receiving, from the connected terminal device, a predetermined report that indicates that the radio quality of a currently connected beam has fallen below a predetermined level, for example. Note that even if the measurement target beam notifying unit 304 does not receive such a predetermined report, the measurement target beam notifying unit 304 may periodically notify, for example, the connected terminal device of the information regarding the measurement target beams.

Note that the measurement target beam notifying unit 304 may acquire from, for example, the CU to which the DU is connected, information regarding measurement target beams to be measured by terminal devices that are connected to DUs under the CU. The CU may notify respective DUs under the CU of different information or notify all the DUs of the same information. When acquiring the information from the CU, the measurement target beam notifying unit 304 can transmit the acquired information as the information regarding the measurement target beams to the terminal device without changing the contents of the acquired information. Note that the measurement target beam notifying unit 304 may make the notification of the information regarding the measurement target beams, for example, by using a broadcast signal or through individual signaling. Also, the measurement target beam notifying unit 304 may make this notification of the information regarding the measurement target beams either before or after a connection is established between the terminal device and the DU. Note that the information regarding the measurement target beams may be any information with which the terminal device can identify the measurement target beams, such as beam IDs with which the respective beams are distinguishable or information with which directions of the beams are identifiable.

The measurement result acquiring unit 305 acquires a result of measurement of the measurement target beams performed by the terminal device, through the radio communication interface 301. The measurement result may be, for example, information that indicates the quality of a radio link such as reference signal received power (RSRP), reference signal received quality (RSRQ), signal-to-noise ratio (SNR), signal-to-interference-plus-noise ratio (SINR), or received signal strength indicator (RSSI). Note that the measurement result may be expressed with, for example, an index. For example, the radio quality may be classified into a plurality of levels, and each of the levels may be expressed with several bits so that a level of the radio quality is indicated by information of several bits. The switching target selecting unit 306 selects a switching target beam with which the terminal device is to connect based on information regarding the measurement result acquired by the measurement result acquiring unit 305. Based on the radio quality indicated by the measurement result, the switching target selecting unit 306 may select, for example, one or more beams in order from the beam with the highest radio quality, or one or more beams from among beams with radio quality of at least a predetermined level, each as the switching target beam. For example, the switching target selecting unit 306 can select, as the switching target beam, a beam with which no terminal device is connected from among the beams with radio quality of at least the predetermined level. Note that the switching target selecting unit 306 may choose not to switch the currently connected beam, that is, may select, for example, the currently connected beam as the switching target beam. For example, the switching target selecting unit 306 can choose not to switch the currently connected beam when there is no beam with radio quality of at least the predetermined level, or when other terminal devices are connected with all beams with radio quality of at least the predetermined level. The switching target selecting unit 306 transmits a selection result to the terminal device that reported the measurement result of the radio quality. The selection result is reported, for example, as information such as a beam ID with which the terminal device can uniquely identify the connection target beam.

In the case where the terminal device transmits information regarding a switching target beam that is selected by the terminal device based on the radio quality, rather than the measurement result of the radio quality, the selection result acquiring unit 307 acquires the information through the radio communication interface 301. Note that the information regarding the switching target beam is, for example, any information with which the DU can uniquely identify the switching target beam. In this case, the terminal device has not yet switched to the switching target beam, and the information regarding the switching target beam is information that indicates a candidate for the switching target beam. The approval determination unit 308 determines whether or not to give approval to the terminal device for actually switching to the switching target beam indicated by the information acquired by the selection result acquiring unit 307. The approval determination unit 308 denies switching of the connection when the switching is not to be performed according to a predetermined standard, such as when another terminal device is connected with the beam specified as the switching target. The information regarding the switching target beam may further include, for example, information regarding radio quality, and the approval determination unit 308 may disapprove switching when the radio quality is below a predetermined level. In contrast, when, for example, there is no reason for denying switching, the approval determination unit 308 can approve switching. The approval determination unit 308 transmits the determination result to the terminal device that transmitted the selection result of the switching target.

In the case where the terminal device is to switch the connected beam, the control unit 303 then performs processing for switching the beam. For example, when the terminal device is to switch the connection target from the currently connected beam to another beam that is formed by the DU that forms the currently connected beam, the control unit 303 controls the radio communication interface 301 to switch a beam to be used for transmitting data to the terminal device. For example, the control unit 303 switches the direction in which a signal to the terminal device is to be transmitted by changing a phase shift amount of the signal corresponding to each transmitting antenna. Also, the control unit 303 performs control to switch the direction in which a high gain is obtained upon reception by changing a phase shift amount of a signal transmitted from the terminal device corresponding to each receiving antenna. In the case where the terminal device is to switch the connection target to a beam that is formed by a second DU other than a first DU that forms the currently connected beam, the control unit 303 controls the fronthaul interface 302 to transmit to the second DU a command that orders the second DU to connect with the terminal device.
When the first DU and the second DU are connected to the same CU, although communication between the first DU and the second DU may be performed via the CU, the communication may be performed not via the CU but via, for example, a switch that is located between the CU and the first and second DUs. When the first DU and the second DU are connected to different CUs, the control unit 303 notifies a first CU to which the control unit 303 (first DU) is connected that the connection target of the terminal device is to be switched to a beam that is formed by the second DU. Upon receiving this notification, the first CU notifies a second CU to which the second DU is connected that the connection target of the terminal device is to be switched to the beam formed by the second DU, and the second CU gives similar notification to the second DU. The second DU then establishes a connection with the terminal device.

Note that, although the control unit 303 includes either the measurement result acquiring unit 305 and the switching target selecting unit 306, or the selection result acquiring unit 307 and the approval determination unit 308, this configuration should not be taken as a limitation. For example, when there is a terminal device that is configured to be capable of reporting only the measurement result and a terminal device that is configured to be capable of reporting only the selection result, the control unit 303 may have all of the above functions. Alternatively, for example, when the terminal device autonomously attempts to establish a connection with the switching target beam through random access or the like, the control unit 303 may have none of the above functions. The control unit 303 can perform control by switching between: control by the measurement result acquiring unit 305 and the switching target selecting unit 306; control by the selection result acquiring unit 307 and the approval determination unit 308; control by a combination of the aforementioned units; and control by none of the aforementioned units. For example, the control unit 303 can determine which control is to be performed according to processing that can be performed by the terminal device. Note that the control unit 303 can control the radio communication interface 301 to notify a terminal device that is adaptable to various control of control to be performed with respect to the terminal device.

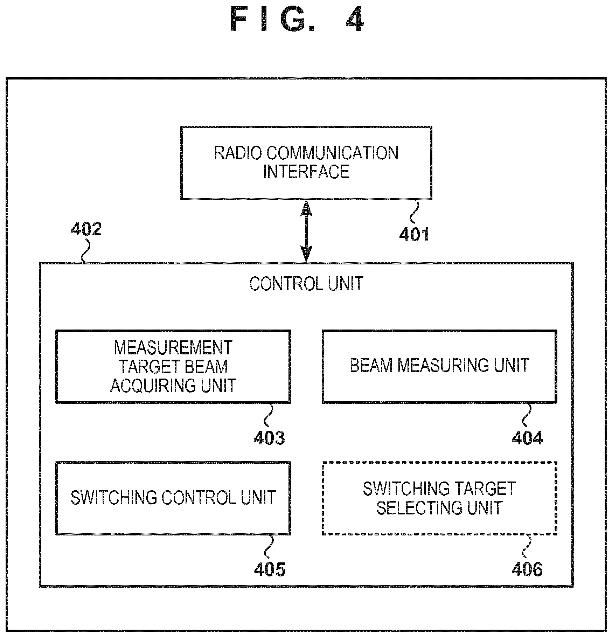

Next, an example of a functional configuration of the terminal device will be described with reference to FIG. 4. The terminal device can include, for example, a radio communication interface 401 and a control unit 402. The control unit 402 includes, for example, a measurement target beam acquiring unit 403, a beam measuring unit 404, and a switching control unit 405. The control unit 402 may also include, for example, a switching target selecting unit 406. Note that, although the terminal device can include various other functional units of a general communication terminal or a general electronic equipment that has a communication function, those functions are not illustrated in the drawings for simplification of the description.

The radio communication interface 401 is configured such that it can connect with at least one of one or more beams formed by the DU by controlling a non-illustrated antenna. The radio communication interface 401 is capable of generating a baseband signal from, for example, to-be-transmitted data or data that is generated by the control unit 402, converting the baseband signal to a signal of a radio frequency, and outputting the signal as a radio signal from the antenna. Also, the radio communication interface 401 is capable of converting a radio signal that is received by the antenna to a baseband signal, and obtaining information from the baseband signal.

The control unit 402 is connected to, for example, the radio communication interface 401, and is configured such that the control unit 402 is capable of performing control by using the radio communication interface 401. The measurement target beam acquiring unit 403 acquires information regarding the measurement target beams from a signal that was individually transmitted from the DU connected to the terminal device or a signal that was broadcast from a DU that is located around the terminal device under control by a CU to which the DU is connected. The acquired information is information with which the terminal device can identify the measurement target beams, as described above.

The beam measuring unit 404 measures radio quality of the measurement target beams that are identified based on the information acquired by the measurement target beam acquiring unit 403. The radio quality measured here may be, for example, reference signal received power (RSRP), reference signal received quality (RSRQ), signal-to-noise ratio (SNR), signal-to-interference-plus-noise ratio (SINR), or received signal strength indicator (RSSI), as described above. In an example, the beam measuring unit 404 controls the radio communication interface 401 to notify the connected DU of information regarding a measurement result. In another example, the beam measuring unit 404 may notify the switching target selecting unit 406 of the information regarding the measurement result, rather than notifying the DU of the information. Upon acquiring the information regarding the measurement result, the switching target selecting unit 406 selects a switching target beam with which the terminal device is to connect by a process similar to the above-described process performed by the switching target selecting unit 306 of the DU.

Note that the beam measuring unit 404 may continuously measure radio quality of the currently connected beam. In this case, when the radio quality enters a predetermined state, such as falling below a predetermined level, the beam measuring unit 404 may control the radio communication interface 401 to transmit a predetermined report that reports the state to the connected DU. Upon receiving the predetermined report, the connected DU can notify the terminal device of the information regarding the measurement target beams, as described above.

In the case where the beam measuring unit 404 has performed control to notify the DU of the information regarding the measurement result, the switching control unit 405 acquires information regarding a switching target beam from the DU. Based on the acquired information, the switching control unit 405 controls the radio communication interface 401 to control switching of the connected beam. In the case where the beam measuring unit 404 has input the information regarding the measurement result to the switching target selecting unit 406 rather than transmitting the information to the DU, the switching control unit 405 controls switching of the connected beam according to operation of the switching target selecting unit 406.

For example, the switching control unit 405 controls the radio communication interface 401 to transmit a beam ID that identifies a switching target beam selected by the switching target selecting unit 406 to the DU. Then, the switching control unit 405 receives information that indicates whether or not switching of the connected beam was approved by the DU, and if the switching is approved, the switching control unit 405 controls the radio communication interface 401 to connect with the switching target beam selected by the switching target selecting unit 406.

Alternatively, the switching control unit 405 may autonomously attempt to establish a connection with the switching target beam selected by the switching target selecting unit 406 through, for example, a random access process, and switch the connected beam without control being performed by the DU. At this time, the switching control unit 405 can attempt to establish a connection with the switching target beam by, for example, using a random access channel that specifies the beam ID that identifies the beam selected by the switching target selecting unit 406. In this case, the connected beam can be switched without control being performed by the DU, and consequently without control being performed by the CU.

### (Flow of Processing)

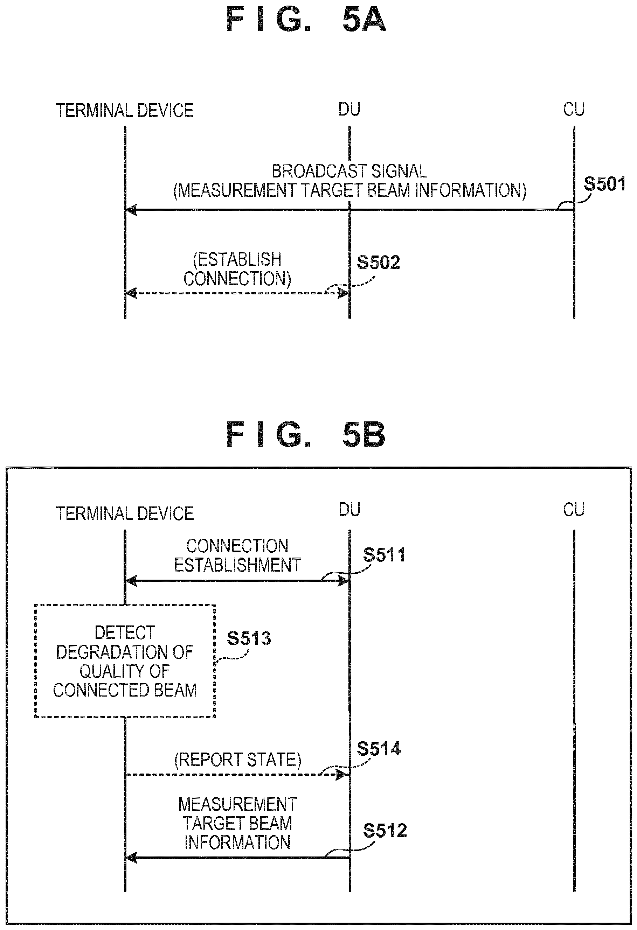

The following describes the flow of processing that is executed by the DU and the terminal device as described above. First, examples of processes for notifying the terminal device of information regarding measurement target beams by the DU will be described with reference to FIGS. 5A and 5B. FIG. 5A illustrates a process for transmitting the information regarding the measurement target beams to the terminal device by using a broadcast signal, and FIG. 5B illustrates a process for transmitting the information regarding the measurement target beams to the terminal device by using an individual signal.

In FIG. 5A, the DU connected to the CU transmits a broadcast signal that includes the information regarding the measurement target beams under control by the CU, for example (S501). The broadcast signal may be, for example, a Master Information Block (MIB) or a System Information Block (SIB). The CU may transmit, for example, an instruction for broadcasting different information from respective DUs. Although in the example of FIG. 5A, the information regarding the measurement target beams determined by the CU is transmitted as is to the terminal device by the DU, this should not be taken as a limitation. For example, the DU may determine information regarding measurement target beams to be given to all terminal devices that connect with a plurality of beams formed by the DU, and transmit the determined information regarding the measurement target beams by using the plurality of beams without specifying destinations. That is, the DU is not necessarily required to transmit the broadcast signal under control by the CU. Note that, when the broadcast signal is transmitted, a connection need not be established between the DU and the terminal device, and the connection may be established after the transmission as necessary (S502).

In FIG. 5B, it is assumed that a connection is established between the DU and the terminal device by using a beam among beams that are formed by the DU (S511). In this case, the DU can notify the terminal device of the information regarding the measurement target beams through individual signaling (S512). Note that the DU may make this individual notification in response to, for example, receiving a predetermined report regarding the state of the connected beam (S514), the report being transmitted by the terminal device upon detecting degradation of the quality of the connected beam (S513). In this case, it is possible to avoid a situation in which the terminal device is unnecessarily notified of the information regarding the measurement target beams when, for example, the state of communication that is performed by using the connected beam is stable.

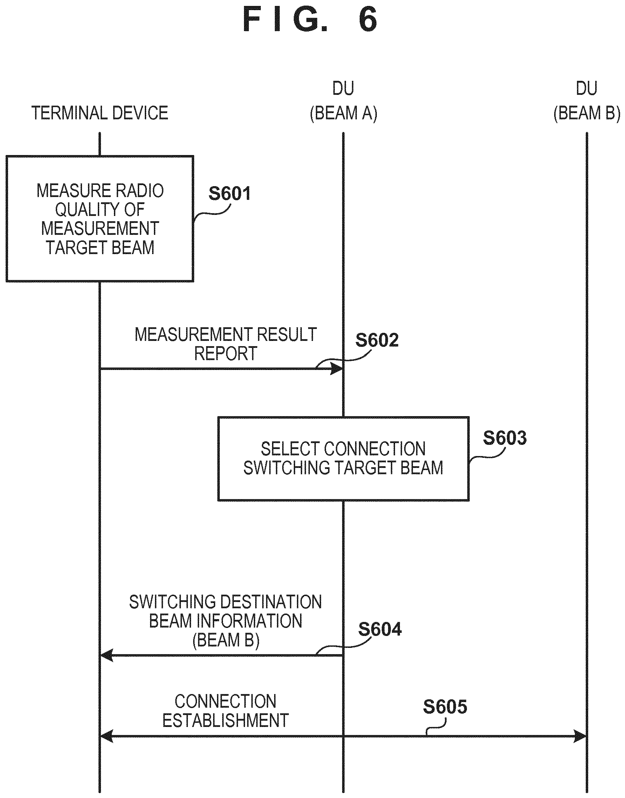

Next, a first example of the flow of processing for switching the connected beam will be described with reference to FIG. 6. First, the terminal device measures radio quality of the measurement target beams of which the terminal device was notified as illustrated in FIG. 5A or 5B (S601). Note that, for example, the terminal device may measure the radio quality of the measurement target beams upon detecting degradation of the quality of the connected beam as in step S513 in FIG. 5B, and need not measure the radio quality so long as the quality of the connected beam does not degrade. Then, the terminal device notifies a DU that forms the connected beam (referred to below as "beam A") of information regarding a result of the measurement in step S601 by using the connected beam (S602). Then, the DU that received the report of the measurement result determines whether or not to switch the beam connected with the terminal device, and when determining to switch, also determines a switching target beam (S603). The DU then notifies the terminal device of information that specifies the determined switching target beam (referred to below as "beam B") (S604). Thereafter, the terminal device switches the connected beam to the beam (beam B) specified by the given information (S605). When the DU that forms the beam A also forms the beam B, the connected DU does not change, and therefore the processing is completed by merely switching the beam. In contrast, when the beam A and the beam B are formed by different DUs, the first DU that forms the beam A can notify a second DU that forms the beam B that the terminal device is to connect with the beam B, as well as making notification of the information regarding the switching target beam (S604). Note that the first DU may inquire the second DU whether or not the terminal device can connect with the beam B before making notification of the information regarding the switching target beam (S604), and determine whether or not to actually cause switching to the beam B according to the result of the inquiry. Note that, although communication between the first DU and the second DU may be performed via a CU, the communication may be performed not via the CU but via, for example, a switch that is located between the CU and the first and second DUs. According to this configuration, the beam connected with the terminal device is switched without RRC signaling, and therefore the load on the CU and the load on the fronthaul line can be reduced.

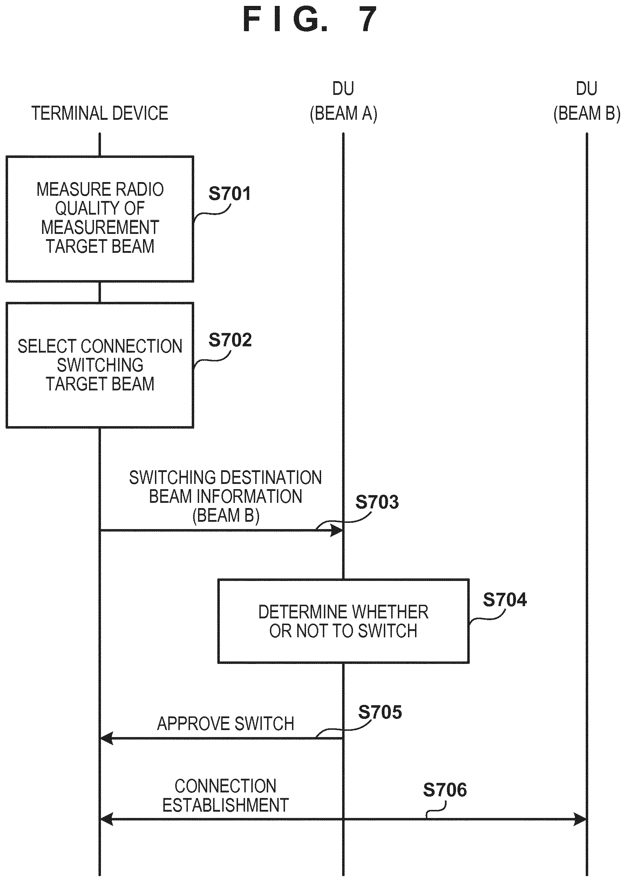

Next, a second example of the flow of the processing for switching the connected beam will be described with reference to FIG. 7. First, the terminal device measures radio quality of the measurement target beams as in step S601 in FIG. 6 (S701). The terminal device then selects a switching target beam based on a measurement result of the radio quality rather than transmitting the measurement result to the DU (S702), and transmits a signal that includes information that identifies the switching target beam to the connected DU (S703). The DU extracts the information identifying the switching target beam from the signal, and determines whether or not to approve switching of the beam connected with the terminal device to the switching target beam (S704). Then, the DU transmits, for example, a message that approves the switching to the terminal device (S705). Note that, when the DU disapproves the switching of the connected beam, the DU can transmit a message denying the switching to the terminal device. When the switching is approved, the terminal device switches the beam connected with the terminal device to the beam selected in step S702 (S706). According to this configuration, only the information indicating the switching target beam is required to be transmitted from the terminal device to the base station device, and therefore it is possible to reduce the amount of the transmitted signal and a received signal as compared with a case where information regarding the radio quality is transmitted. Further, in this example too, the beam connected with the terminal device is switched without RRC signaling, and therefore the load on the CU and the load on the fronthaul line can be reduced.

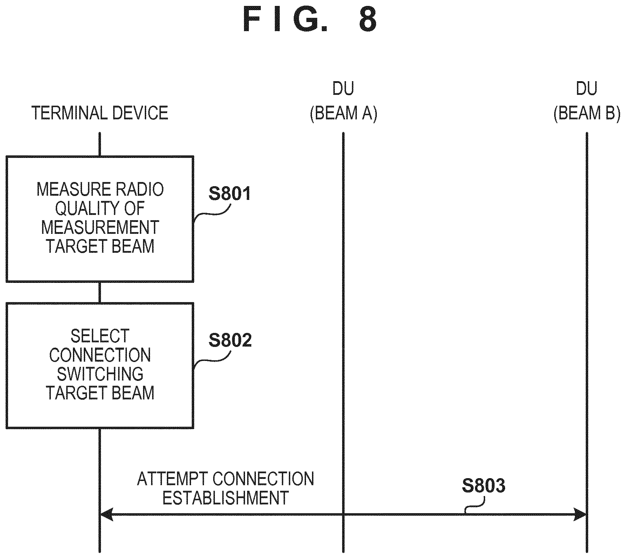

Lastly, a third example of the flow of the processing for switching the connected beam will be described with reference to FIG. 8. First, the terminal device measures radio quality of the measurement target beams (S801), and selects a switching target beam based on a measurement result of the radio quality rather than transmitting the measurement result to the DU (S802) as in steps S701 and S702 in FIG. 7. Then, the terminal device attempts to establish a connection with the selected switching target beam according to the selection result by, for example, using a random access channel that is directed to the selected switching target beam (S803). Upon establishment of the connection, switching of the beam connected with the terminal device is completed. According to this configuration, the process for obtaining approval from the DU is unnecessary, and therefore the amount of signaling and the load on the DU can be greatly reduced. Further, in this example too, the beam connected with the terminal device is switched without RRC signaling, and therefore the load on the CU and the load on the fronthaul line can be reduced.

As described above, the beam connected with the terminal device can be switched without RRC signaling in the present embodiment. Therefore, in a configuration in which a base station device includes a plurality of first units that control layers lower than the RRC layer and that are connected to a second unit that performs processing in the RRC layer and layers higher than the RRC layer, the load on the second unit and the load on a line between the first units and the second unit can be greatly reduced.

The present invention is not limited to the above embodiment and various changes and modifications can be made within the spirit and scope of the present invention. Therefore, to apprise the public of the scope of the present invention, the following claims are made.

This application claims priority from Japanese Patent Application No. 2016-188151 filed September 27, 2016, which is hereby incorporated by reference herein.

## Claims

1. A control device in a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the control device being any of the one or more first devices, and comprising:
control means; and
communication means that is capable of transmitting a signal to and receiving a signal from a terminal device by using an antenna that is capable of forming at least one beam,
wherein the control means performs control to:
cause the communication means to notify the terminal device of information regarding measurement target beams that are to be measured by the terminal device;
while a connection to the terminal device is established with a first beam among the at least one beam, cause the communication means to receive a measurement report regarding the measurement target beams from the terminal device;
based on the measurement report, select a second beam from among the measurement target beams, the second beam being a beam with which the terminal device is to connect by switching from the first beam; and
cause the communication means to notify the terminal device of information regarding the second beam,
the measurement target beams are included in beams that are formed by the one or more first devices connected to the second device, and
the control means performs at least control regarding reception of the measurement report, selection of the second beam, and notification of the information regarding the second beam, without involving the second device.

2. The control device according to claim 1,
wherein the control means causes the communication means to notify the terminal device of the information regarding the measurement target beams when the communication means has received a predetermined report regarding the first beam from the terminal device.

3. A control device in a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the control device being any of the one or more first devices, and comprising:
control means; and
communication means that is capable of transmitting a signal to and receiving a signal from a terminal device by using an antenna that is capable of forming at least one beam,
wherein the control means performs control to:
cause the communication means to notify the terminal device of information regarding measurement target beams that are to be measured by the terminal device;
while a connection to the terminal device is established with a first beam among the at least one beam, cause the communication means to receive, from the terminal device, notification of a result of selection of a second beam by the terminal device, the second beam being a beam with which the terminal device is to connect by switching from the first beam;
determine whether or not to approve switching of a beam that is connected with the terminal device from the first beam to the second beam; and
cause the communication means to notify the terminal device of a result of the determination,
the measurement target beams are included in beams that are formed by the one or more first devices connected to the second device, and
the control means performs at least control regarding reception of the notification of the selection result, determination as to whether or not to approve switching to the second beam, and notification of the result of the determination, without involving the second device.

4. The control device according to claim 1 or 3,
wherein the control means causes the communication means to notify the terminal device of the information regarding the measurement target beams by using a broadcast signal that is transmitted under control by the second device.

5. The control device according to claim 4,
wherein notification of the information regarding the measurement target beams is made by using the broadcast signal before the connection to the terminal device is established with the first beam.

6. The control device according to any one of claims 1 to 5,
wherein the measurement target beams are included in beams that are formed by the control device.

7. The control device according to any one of claims 1 to 5,
wherein the measurement target beams include a beam that is formed by a device other than the control device from among the one or more first devices.

8. A terminal device that is connected to a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the terminal device comprising:
control means; and
communication means that is capable of transmitting a signal to and receiving a signal from any of the one or more first devices by connecting with any of at least one beam that is formed by the one or more first devices,
wherein the control means performs control to:
cause the communication means to receive information regarding measurement target beams that are to be measured by the terminal device from a control device that is any of the one or more first devices;
measure each of the measurement target beams through the communication means;
while a connection to the control device is established with a first beam among the at least one beam, cause the communication means to transmit a measurement report regarding the measurement target beams to the control device;
cause the communication means to receive, from the control device, information regarding a second beam with which the terminal device is to connect by switching from the first beam; and
cause the communication means to switch a beam that is connected with the terminal device to the second beam,
the measurement target beams are included in beams that are formed by the one or more first devices connected to the second device, and
the control device performs control regarding switching of the beam connected with the terminal device based on the measurement report without involving the second device.

9. A terminal device that is connected to a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the terminal device comprising:
control means; and
communication means that is capable of transmitting a signal to and receiving a signal from any of the one or more first devices by connecting with any of at least one beam that is formed by the one or more first devices,
wherein the control means performs control to:
cause the communication means to receive information regarding measurement target beams that are to be measured by the terminal device from a control device that is any of the one or more first devices;
measure each of the measurement target beams through the communication means;
while a connection to the control device is established with a first beam among the at least one beam, select a second beam based on a measurement result regarding the measurement target beams, the second beam being a beam with which the terminal device is to connect by switching from the first beam;
cause the communication means to notify the control device of a result of the selection;
cause the communication means to receive information that indicates whether or not the result of the selection is approved by the control device; and
when the result of the selection is approved by the control device, cause the communication means to switch a beam that is connected with the terminal device from the first beam to the second beam,
the measurement target beams are included in beams that are formed by the one or more first devices connected to the second device, and
the control device performs control regarding switching of the beam connected with the terminal device based on the result of the selection without involving the second device.

10. A terminal device that is connected to a base station device that includes one or more first devices and a second device that is connected to the one or more first devices, the one or more first devices controlling layers that are lower than a radio resource control (RRC) layer and that include a medium access control (MAC) layer, and the second device controlling layers that are higher than the layers controlled by the one or more first devices and that include the RRC layer, the terminal device comprising:
control means; and
communication means that is capable of transmitting a signal to and receiving a signal from any of the one or more first devices by connecting with any of at least one beam that is formed by the one or more first devices,
wherein the control means performs control to:
cause the communication means to receive information regarding measurement target beams that are to be measured by the terminal device from a control device that is any of the one or more first devices;
measure each of the measurement target beams through the communication means;
while a connection to the control device is established with a first beam among the at least one beam, select a second beam based on a measurement result regarding the measurement target beams, the second beam being a beam with which the terminal device is to connect by switching from the first beam; and
cause the communication means to establish a connection with the second beam without control being performed by the control device, and
the measurement target beams are included in beams that are formed by the one or more first devices connected to the second device.

11. The terminal device according to any one of claims 8 to 10,
wherein the control means causes the communication means to receive the information regarding the measurement target beams, which information is transmitted by using a broadcast signal from the control device under control by the second device before the connection to the control device is established with the first beam.

12. The terminal device according to claim 8,
wherein the control means causes the communication means to receive the information regarding the measurement target beams when the communication means has transmitted a predetermined report regarding the first beam to the control device.

13. A method for controlling a control device in a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the control device being any of the one or more first devices and including communication means that is capable of transmitting a signal to and receiving a signal from a terminal device by using an antenna that is capable of forming at least one beam, the method comprising:
causing the communication means to notify the terminal device of information regarding measurement target beams that are to be measured by the terminal device;
while a connection to the terminal device is established with a first beam among the at least one beam, causing the communication means to receive a measurement report regarding the measurement target beams from the terminal device;
based on the measurement report, selecting a second beam from among the measurement target beams, the second beam being a beam with which the terminal device is to connect by switching from the first beam; and
causing the communication means to notify the terminal device of information regarding the second beam,
wherein the measurement target beams are included in beams that are formed by the one or more first devices connected to the second device, and
at least control regarding reception of the measurement report, selection of the second beam, and notification of the information regarding the second beam is performed without involving the second device.

14. A method for controlling a control device in a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the control device being any of the one or more first devices and including communication means that is capable of transmitting a signal to and receiving a signal from a terminal device by using an antenna that is capable of forming at least one beam, the method comprising:
causing the communication means to notify the terminal device of information regarding measurement target beams that are to be measured by the terminal device;
while a connection to the terminal device is established with a first beam among the at least one beam, causing the communication means to receive, from the terminal device, notification of a result of selection of a second beam by the terminal device, the second beam being a beam with which the terminal device is to connect by switching from the first beam;
determining whether or not to approve switching of a beam that is connected with the terminal device from the first beam to the second beam; and
causing the communication means to notify the terminal device of a result of the determination,
wherein the measurement target beams are included in beams that are formed by the one or more first devices connected to the second device, and
at least control regarding reception of the notification of the selection result, determination as to whether or not to approve switching to the second beam, and notification of the result of the determination is performed without involving the second device.

15. A method for controlling a terminal device that is connected to a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the terminal device including communication means that is capable of transmitting a signal to and receiving a signal from any of the one or more first devices by connecting with any of at least one beam that is formed by the one or more first devices, the method comprising:
causing the communication means to receive information regarding measurement target beams that are to be measured by the terminal device from a control device that is any of the one or more first devices;
measuring each of the measurement target beams through the communication means;
while a connection to the control device is established with a first beam among the at least one beam, causing the communication means to transmit a measurement report regarding the measurement target beams to the control device;
causing the communication means to receive, from the control device, information regarding a second beam with which the terminal device is to connect by switching from the first beam; and
causing the communication means to switch a beam that is connected with the terminal device to the second beam,
wherein the measurement target beams are included in beams that are formed by the one or more first devices connected to the second device, and
the control device performs control regarding switching of the beam connected with the terminal device based on the measurement report without involving the second device.

16. A method for controlling a terminal device that is connected to a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the terminal device including communication means that is capable of transmitting a signal to and receiving a signal from any of the one or more first devices by connecting with any of at least one beam that is formed by the one or more first devices, the method comprising:
causing the communication means to receive information regarding measurement target beams that are to be measured by a control device that is any of the one or more first devices from the control device;
measuring each of the measurement target beams through the communication means;
while a connection to the terminal device is established with a first beam among the at least one beam, selecting a second beam based on a measurement result regarding the measurement target beams, the second beam being a beam with which the terminal device is to connect by switching from the first beam;
causing the communication means to notify the control device of a result of the selection;
causing the communication means to receive information that indicates whether or not the result of the selection is approved by the control device; and
when the result of the selection is approved by the control device, causing the communication means to switch a beam that is connected with the terminal device from the first beam to the second beam,
wherein the measurement target beams are included in beams that are formed by the one or more first devices connected to the second device, and
the control device performs control regarding switching of the beam connected with the terminal device based on the result of the selection without involving the second device.

17. A method for controlling a terminal device that is connected to a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the terminal device including communication means that is capable of transmitting a signal to and receiving a signal from any of the one or more first devices by connecting with any of at least one beam that is formed by the one or more first devices, the method comprising:
causing the communication means to receive information regarding measurement target beams that are to be measured by a control device that is any of the one or more first devices from the control device;
measuring each of the measurement target beams through the communication means;
while a connection to the terminal device is established with a first beam among the at least one beam, selecting a second beam based on a measurement result regarding the measurement target beams, the second beam being a beam with which the terminal device is to connect by switching from the first beam; and
causing the communication means to establish a connection with the second beam without control being performed by the control device,
wherein the measurement target beams are included in beams that are formed by the one or more first devices connected to the second device.

18. A program to be executed by a computer that is included in a control device in a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the control device being any of the one or more first devices and including the computer and communication means that is capable of transmitting a signal to and receiving a signal from a terminal device by using an antenna that is capable of forming at least one beam,
wherein the program causes the computer to:
control the communication means to notify the terminal device of information regarding measurement target beams that are to be measured by the terminal device;
while a connection to the terminal device is established with a first beam among the at least one beam, control the communication means to receive a measurement report regarding the measurement target beams from the terminal device;
based on the measurement report, select a second beam from among the measurement target beams, the second beam being a beam with which the terminal device is to connect by switching from the first beam; and
control the communication means to notify the terminal device of information regarding the second beam,
the measurement target beams are included in beams that are formed by the one or more first devices connected to the second device, and
at least control regarding reception of the measurement report, selection of the second beam, and notification of the information regarding the second beam is performed without involving the second device.

19. A program to be executed by a computer that is included in a control device in a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the control device being any of the one or more first devices and including the computer and communication means that is capable of transmitting a signal to and receiving a signal from a terminal device by using an antenna that is capable of forming at least one beam,
wherein the program causes the computer to:
control the communication means to notify the terminal device of information regarding measurement target beams that are to be measured by the terminal device;
while a connection to the terminal device is established with a first beam among the at least one beam, control the communication means to receive, from the terminal device, notification of a result of selection of a second beam by the terminal device, the second beam being a beam with which the terminal device is to connect by switching from the first beam;
determine whether or not to approve switching of a beam that is connected with the terminal device from the first beam to the second beam; and
control the communication means to notify the terminal device of a result of the determination,
the measurement target beams are included in beams that are formed by the one or more first devices connected to the second device, and
at least control regarding reception of the notification of the selection result, determination as to whether or not to approve switching to the second beam, and notification of the result of the determination is performed without involving the second device.

20. A program to be executed by a computer that is included in a terminal device that is connected to a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the terminal device including the computer and communication means that is capable of transmitting a signal to and receiving a signal from any of the one or more first devices by connecting with any of at least one beam that is formed by the one or more first devices,
wherein the program causes the computer to:
control the communication means to receive information regarding measurement target beams that are to be measured by the terminal device from a control device that is any of the one or more first devices;
measure each of the measurement target beams through the communication means;
while a connection to the control device is established with a first beam among the at least one beam, control the communication means to transmit a measurement report regarding the measurement target beams to the control device;
control the communication means to receive, from the control device, information regarding a second beam with which the terminal device is to connect by switching from the first beam; and
control the communication means to switch a beam that is connected with the terminal device to the second beam,
the measurement target beams are included in beams that are formed by the one or more first devices connected to the second device, and
the control device performs control regarding switching of the beam connected with the terminal device based on the measurement report without involving the second device.

21. A program to be executed by a computer that is included in a terminal device that is connected to a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the terminal device including the computer and communication means that is capable of transmitting a signal to and receiving a signal from any of the one or more first devices by connecting with any of at least one beam that is formed by the one or more first devices,
wherein the program causes the computer to:
control the communication means to receive information regarding measurement target beams that are to be measured by the terminal device from a control device that is any of the one or more first devices;
measure each of the measurement target beams through the communication means;
while a connection to the control device is established with a first beam among the at least one beam, select a second beam based on a measurement result regarding the measurement target beams, the second beam being a beam with which the terminal device is to connect by switching from the first beam;
control the communication means to notify the control device of a result of the selection;
control the communication means to receive information that indicates whether or not the result of the selection is approved by the control device; and
when the result of the selection is approved by the control device, control the communication means to switch a beam that is connected with the terminal device from the first beam to the second beam,
the measurement target beams are included in beams that are formed by the one or more first devices connected to the second device, and
the control device performs control regarding switching of the beam connected with the terminal device based on the result of the selection without involving the second device.

22. A program to be executed by a computer that is included in a terminal device that is connected to a base station device that includes one or more first devices and a second device that is connected to the one or more first devices, the one or more first devices controlling layers that are lower than a radio resource control (RRC) layer and that include a medium access control (MAC) layer, the second device controlling layers that are higher than the layers controlled by the one or more first devices and that include the RRC layer, and the terminal device including the computer and communication means that is capable of transmitting a signal to and receiving a signal from any of the one or more first devices by connecting with any of at least one beam that is formed by the one or more first devices,
wherein the program causes the computer to:
control the communication means to receive information regarding measurement target beams that are to be measured by the terminal device from a control device that is any of the one or more first devices;
measure each of the measurement target beams through the communication means;
while a connection to the control device is established with a first beam among the at least one beam, select a second beam based on a measurement result regarding the measurement target beams, the second beam being a beam with which the terminal device is to connect by switching from the first beam; and
control the communication means to establish a connection with the second beam without control being performed by the control device, and
the measurement target beams are included in beams that are formed by the one or more first devices connected to the second device.
